# EUROPÄISCHE PATENTANMELDUNG

(11) **EP 2 944 611 A1**
(43) Veröffentlichungstag der Anmeldung: **18.11.2015**
(21) Anmeldenummer: 14168678.2
(22) Anmeldetag: 16.05.2014
(51) Int. Cl.: C01G 25/00, C04B 35/486, H01M 10/0562

(54) **Verfahren zur Herstellung eines kubisch kristallinen, Aluminium, Lithium, Lanthan und Zirkon enthaltenden Mischoxides mit Granatstruktur**

(71) Anmelder: Evonik Degussa GmbH, 45128 Essen (DE)
(72) Erfinder: Katusic, Stipan, 65812 Bad Soden (DE); Kress, Peter, 63791 Karlstein (DE); Wiegand, Armin, 63538 Großkrotzenburg (DE); Hagemann, Michael, 63796 Kahl (DE)

(57) **Zusammenfassung**

Verfahren zur Herstellung eines kubisch kristallinen Mischoxidpulvers mit Granatstruktur der Zusammensetzung LiₓLa₃Zr₂Al_{y}O_{8,5+0,5x+1,5y} mit 6 ≤ x ≤ 7, 0,2 ≤ y ≤ 0,5 mit einer BET-Oberfläche von ≤ 3 m²/g und einer Feststoffdichte von wenigstens 95% der theoretischen Feststoffdichte, bei dem man eine Lösung enthaltend jeweils ein oder mehrere Verbindungen des Lithiums, Lanthans, Aluminiums und des Zirkons in einer Konzentration entsprechend der Stöchiometrie und in Form feiner Tröpfchen in eine in einem Reaktionsraum brennende Flamme einbringt, die gebildet wird, indem man ein Sauerstoff enthaltendes Gas und ein bei der Reaktion mit Sauerstoff Wasser bildendes Brenngas in den Reaktionsraum einbringt und dort zündet und nachfolgend den Feststoff von dampf- oder gasförmigen Stoffen abtrennt und thermisch behandelt.

## Beschreibung

Die Erfindung betrifft Verfahren zur Herstellung eines kubisch kristallinen, Aluminium, Lithium, Lanthan und Zirkon enthaltenden Mischoxides mit Granatstruktur.

In DE-A-102007030604 wird ein Verfahren zur Herstellung eines Lithium, Lanthan und Zirkon enthaltenden Mischoxidpulver durch eine Festphasenreaktion offenbart. Dabei werden die Nitrate, Carbonate und Hydroxide der Metalle in einem ersten Schritt gemischt, beispielsweise mittels einer Kugelmühle in 2-Propanol. Das so erhaltene Gemisch wird anschließend für mehrere Stunden an Luft über einen Zeitraum von 4-8 Stunden auf 400-1000°C erhitzt. Anschließend wird erneut ein Mahlvorgang durchgeführt. Das Reaktionsprodukt wird anschließend bei uniaxialem oder isostatischem Druck in Formstücke gepresst. Diese werden dann für mehrere Stunden bei Temperaturen von 700-1200°C gesintert. Man erhält ein Mischoxid mit Granatstruktur.

Weitere Festphasenreaktionen zur Herstellung Lithium, Lanthan und Zirkon enthaltender Mischoxide werden in EP-A-2159867 oder WO2010/090301 offenbart.

In Solid State Ionics 185 (2011) 42-46 wird ein Sol-Gelverfahren zur Herstellung Lithium, Lanthan und Zirkon enthaltender Mischoxide offenbart, bei dem man Li₂CO₃ und La₂O₃ in HNO₃ und Zr(OC₂H₅)₄ in Ethanol löst. Beide Lösungen werden gemischt und nachfolgend mit Zitronensäure und Ethylenglykol gemischt. Die Lösung wird 3 Stunden bei 323K gerührt und nachfolgend das Lösungsmittel abdestilliert. Das so erhaltene Gel wird 24 Stunden bei 473K behandelt. Das erhaltene Pulver wird vermahlen und an Luft bei Temperaturen von 923 bis 1173K für 5 Stunden calciniert. Ein ähnliches Verfahren wird auch in Solid State Ionics 183 (2011) 48-53 offenbart.

Lithium, Lanthan und Zirkon enthaltende Mischoxide werden bislang durch klassische, nasschemische Verfahren hergestellt. Diese umfassen Sol-GelVerfahren, Fällungsverfahren und Festphasenreaktionen. Oft sind bei diesen Verfahren mehrere Prozessschritte nötig, die Verfahren lassen oft bezüglich der Kontrolle und der Reproduzierbarkeit der Reaktion zu wünschen übrig.

Aufgabe der vorliegenden Erfindung war es ein Verfahren bereitzustellen, welches die genannten Nachteile nicht aufweist und mit dem man in kurzer Zeit größere Mengen an Lithium, Lanthan und Zirkon enthaltende Mischoxide herstellen kann. Aufgabe der Erfindung war es insbesondere Mischoxide mit kubisch kristalliner Granat-Struktur herzustellen.

Gegenstand der Erfindung ist ein Verfahren zur Herstellung eines Mischoxidpulvers der Zusammensetzung
LiₓLa₃Zr₂Al_{y}O_{8,5+0,5x+1,5y} mit 6 ≤ x ≤ 7, 0,2 ≤ y ≤ 0,5,
bei dem man eine Lösung enthaltend jeweils ein oder mehrere Verbindungen des Lithiums, Lanthans, Aluminiums und des Zirkons in einer Konzentration entsprechend der Stöchiometrie und in Form feiner Tröpfchen in eine in einem Reaktionsraum brennende Flamme einbringt, die gebildet wird, indem man ein Sauerstoff enthaltendes Gas und ein bei der Reaktion mit Sauerstoff Wasser bildendes Brenngas in den Reaktionsraum einbringt und dort zündet und nachfolgend den Feststoff von dampf- oder gasförmigen Stoffen abtrennt.

Das so hergestellte Mischoxidpulver soll im Rahmen der vorliegenden Erfindung als Mischoxidpulver A bezeichnet werden. Unter Mischoxid ist die innige Vermischung aller Mischoxidkomponenten zu verstehen. Es handelt sich demnach weitestgehend um eine Mischung auf atomarer Ebene, nicht um eine physikalische Mischung von Oxiden.

Gewöhnlich enthalten Zirkonverbindungen bis zu 2 Gew.-% Hafnium-Verbindungen als Verunreinigung, so dass das daraus hergestellte Mischoxidpulver ebenfalls Hafnium enthält. Im Rahmen der vorliegenden Erfindung soll dieser zwangsweise Anteil an Hafnium nicht als Mischoxidkomponente betrachtet werden.

### Eingesetzte Lösungen

Bei dem erfindungsgemäßen Verfahren werden die Lösung oder die Lösungen in Form feiner Tröpfchen in den Reaktionsraum eingebracht. Bevorzugt weisen die feinen Tröpfchen eine mittlere Tröpfchengröße 1 - 120 µm, besonders bevorzugt von 30 - 100 µm auf. Zur Erzeugung der Tröpfchen werden üblicherweise Ein- oder Mehrdüsen eingesetzt.

Die besten Ergebnisse werden erhalten, wenn die Metallverbindungen in einer Lösung vorliegen. Um die Löslichkeit zu Erreichen und um eine geeignete Viskosität für das Zerstäuben der Lösung zu erzielen kann die Lösung erwärmt werden. Prinzipiell sind alle löslichen Metallverbindungen einsetzbar, die oxidierbar sind. Dabei kann es sich um anorganische Metallverbindungen, wie Nitrate, Chloride, Bromide, oder organische Metallverbindungen, wie Alkoxide oder Carboxylate anorganische und/oder organische Metallverbindungen handeln. Als Alkoxide können bevorzugt Ethylate, n-Propylate, iso-Propylate, n-Butylate und/oder tert.-Butylate eingesetzt werden. Als Carboxylate können die der Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure und/oder Laurinsäure zugrundeliegenden Verbindungen eingesetzt werden. Besonders vorteilhaft können 2-Ethlyhexanoate oder Laurate eingesetzt werden. Die Lösung kann ein oder mehrere anorganische Metallverbindungen, ein oder mehrere organische Metallverbindungen oder Mischungen von anorganischen und organischen Metallverbindungen enthalten.

Vorzugsweise werden die Nitrate von Lithiums, Lanthans, und Zirkon und Aluminiums eingesetzt.

Bei den Lösungsmitteln kann bevorzugt aus der Gruppe bestehend aus Wasser, C₅-C₂₀-Alkanen, C₁-C₁₅-Alkancarbonsäuren und/oder C₁-C₁₅-Alkanolen ausgewählt werden. Besonders bevorzugt kann Wasser oder ein Mischung aus Wasser und einem organischen Lösungsmittel eingesetzt werden.

Als organische Lösungsmittel, beziehungsweise als Bestandteil von organischen Lösungsmittelgemischen, können bevorzugt Alkohole wie Methanol, Ethanol, n-Propanol, iso-Propanol, n-Butanol oder tert.-Butanol, Diole wie Ethandiol, Pentandiol, 2-Methyl-2,4-pentandiol, C₁-C₁₂-Carbonsäuren wie beispielsweise Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure, Laurinsäure eingesetzt werden. Weiterhin können Benzol, Toluol, Naphtha und/oder Benzin eingesetzt werden.

Vorzugsweise werden wässerige Lösungen eingesetzt, wobei unter einer wässerige Lösung eine Lösung zu verstehen ist, bei der Wasser der Hauptbestandteil eines Lösungsmittelgemisches ist oder bei der allein Wasser das Lösungsmittel ist.

Die Konzentration der eingesetzten Lösungen ist nicht besonders limitiert. Liegt nur eine Lösung vor, die alle Mischoxidkomponenten enthält, beträgt die Konzentration in der Regel 1 bis 50 Gew.-%, bevorzugt 3 bis 30 Gew.-%, ganz besonders bevorzugt 5 - 20 Gew.%, jeweils bezogen auf die Summe der Oxide.

### Eingesetzte Gase

Als Brenngase, die bei der Reaktion mit Sauerstoff bilden, können Wasserstoff, Methan, Ethan, Propan, Butan und deren Gemische eingesetzt werden. Bevorzugt wird Wasserstoff eingesetzt.

Das flammenbildende, Sauerstoff enthaltende Gas ist in der Regel Luft.

Die Menge an Sauerstoff ist bei dem erfindungsgemäßen Verfahren so zu wählen, dass sie mindestens zur vollständigen Umsetzung des Brenngases und aller Metallverbindungen ausreicht. Es ist in der Regel vorteilhaft einen Überschuß an Sauerstoff einzusetzen. Dieser Überschuß wird zweckmäßigerweise ausgedrückt als das Verhältnis von vorhandenem Sauerstoff / Verbrennung des Brenngases notwendiger Sauerstoff und als lambda bezeichnet. Lambda beträgt bevorzugt 1,5 bis 6,0, besonders bevorzugt 2,0 bis 4,0.

Darüberhinaus kann zusätzliches Sauerstoff enthaltende Gas in den Reaktionsraum eingebracht werden.

Die Lösung wird bevorzugt mittels eines Zerstäubergases in den Reaktionsraum eingebracht. Als Zerstäubergase eigenen sich beispielsweise Stickstoff oder Luft. Wird Luft eingesetzt, so wird diese nicht bei der Berechnung von lambda berücksichtigt.

Eine besondere Ausführungsform sieht vor, Ammoniak und/oder eine Ammoniak bildende Substanz in den Reaktionsraum einzubringen. Dies kann beispielsweise erfolgen, indem man eine Ammoniak bildende Substanz, beispielsweise Ammoniumcarbonat, Ammoniumhydrogencarbonat oder Harnstoff, in der Lösung vorlegt, die in die Flamme eingebracht wird. Eine andere Ausführungsform sieht vor, Ammoniakgas direkt in den Reaktionsraum, bevorzugt in die Flamme, einzubringen. Wieder eine andere Ausführungsform sieht vor Ammoniakgas dem Zerstäubergas zuzumischen.

Die Konzentration des Ammoniakgases beträgt bevorzugt 0,01 - 1 kg/Nm³ Zerstäubergas, besonders bevorzugt 0,05 - 0,3 kg/Nm³ Zerstäubergas oder 0,001 - 0,05 kg/Nm³ (Brenngas + Sauerstoff enthaltendes Gas) für den Fall dass das Ammoniakgas in direkt in die Flamme eingebracht wird.

Es hat sich gezeigt, dass sich durch diese Massnahme Mischoxidpulver A herstellen lassen, die in einem Nachfolgeschritt ein verbessertes Sinterverhalten aufweisen. Gegenwärtig wird davon ausgegangen, dass bei Zugabe von Ammoniak kleinere Partikel gebildet werden als ohne Ammoniak.

Weiterhin beträgt die mittlere Verweilzeit des Reaktionsgemisches im Reaktionsraum bevorzugt 0,5 - 2,5 s, besonders bevorzugt 0,5 - 1 s.

Die mittlere Geschwindigkeit im Reaktionsraum beträgt bevorzugt 1 - 20 Nm/s, besonders bevorzugt 3 - 10 Nm/s. Bei den Angaben zur Geschwindigkeit handelt es sich um normierte Geschwindigkeiten. Sie ergeben sich durch Division des Volumenstromes mit der Einheit Nm³/h und der Querschnittsfläche.

Ein weiterer Gegenstand der Erfindung ist ein spezielles Mischoxidpulver A*, welches mittels des erfindungsgemäßen Verfahrens hergestellt werden kann. Dabei handelt es sich um ein Mischoxidpulver der Zusammensetzung LiₓLa₃Zr₂Al_{y}O_{8,5+0,5x+1,5y} mit 6 ≤ x ≤ 7, 0,2 ≤ y ≤ 0,5, welches eine BET-Oberfläche von 3 bis 20 m²/g und einen und einen d₅₀-Wert von kleiner oder gleich 5 µm aufweist.

Die BET-Oberfläche wird bestimmt nach DIN ISO 9277. Die BET-Oberfläche wird bestimmt nach DIN ISO 9277. Der d₅₀-Wert resultiert aus der Summendurchgangsverteilungskurve der volumengemittelten Grössenverteilung. Diese wird in üblicher Weise durch Laserbeugung ermittelt. Im Rahmen der vorliegenden Erfindung wird hierzu ein Gerät Cilas 1064 der Firma Cilas eingesetzt. Unter einem d₅₀-Wert wird verstanden, dass 50% der Mischoxidpartikel A* innerhalb des angegebenen Grössenbereichs liegen. Ein d₅₀-Wert von 5 µm bedeutet demnach, dass 50% der Partikeldurchmesser kleiner als 5 µm sind. Ein d₉₀-Wert von 8 µm bedeutet, dass 90% der Partikeldurchmesser kleiner als 8 µm sind. Ein d₁₀-Wert von 0,3 µm bedeutet, dass 10% der Partikeldurchmesser kleiner als 0,3 µm sind.

Der d₉₀-Wert der erfindungsgemäßen Mischoxidpartikel A* kann bevorzugt 1 bis 15 µm, besonders bevorzugt 8 bis 10 µm betragen.

Der d₁₀-Wert der erfindungsgemäßen Mischoxidpartikel A* kann bevorzugt 3 bis 25 µm, besonders bevorzugt 0,2 bis 1 µm betragen.

Ein weiterer Gegenstand der Erfindung ist ein Verfahren zur Herstellung eines kubisch kristallinen Mischoxidpulvers mit Granatstruktur, Mischoxidpulver B, der Zusammensetzung LiₓLa₃Zr₂Al_{y}O_{8,5+0,5x+1,5y}
mit 6 ≤ x ≤ 7, 0,2 ≤ y ≤ 0,5 mit
a) einer BET-Oberfläche von ≤ 3 m²/g, bevorzugt ≤ 1 m²/g und
b) wenigstens 95% der theoretischen Dichte
bei dem man das Mischoxid A bei Temperaturen von 700 bis 1200°C über einen Zeitraum von 3 bis 24 Stunden, bevorzugt 6 bis 12 Stunden unter Durchleiten eines inerten Gases wie beispielsweise Stickstoff oder Argon thermisch behandelt.

Es ist auch möglich die thermische Behandlung in einem Vakuum, beispielsweise bei einem Druck von < 300 mbar, durchzuführen. Hierbei kann vorgesehen sein die Apparatur ein oder mehrere Male mit einem inerten Gas zu spülen um den Anteil an Sauerstoff zu minimieren. Bei einer thermischen Behandlung im Vakuum ist mit einem rascheren Kristallwachstun zu rechnen.

Die Feststoffdichte wird durch Gaspyknometrie nach DIN 66137-2 (2004) bestimmt. Zur Bestimmung eignet sich ein Heliumpyknometer AccuPyc II 1340, Fa. Micromeritics^{®}. Die theoretische Feststoffdichte von kubischem Li₇La₃Zr₂O₁₂ beträgt 5,100 g/cm³.

Zum gleichen Produkt gelangt man, indem man eine Lösung enthaltend jeweils ein oder mehrere Verbindungen des Lithiums, Lanthans, Aluminiums und des Zirkons in einer Konzentration entsprechend der Stöchiometrie und in Form feiner Tröpfchen in eine in einem Reaktionsraum brennende Flamme einbringt, die gebildet wird, indem man ein Sauerstoff enthaltendes Gas und ein bei der Reaktion mit Sauerstoff Wasser bildendes Brenngas in den Reaktionsraum einbringt und dort zündet und nachfolgend den Feststoff von dampf- oder gasförmigen Stoffen abtrennt und bei Temperaturen von 700 bis 1200°C über einen Zeitraum von 3 bis 24 Stunden, bevorzugt 6 bis 12 Stunden, bevorzugt unter Durchleiten eines inerten Gases wie beispielsweise Stickstoff oder Argon, thermisch behandelt.

Ein weiterer Gegenstand der Erfindung ist die Verwendung der erfindungsgemäßen Mischoxidpulver oder der nach den erfindungsgemäßen Verfahren hergestellten Mischoxidpulver als Feststoffelektrolyt in Lithiumionenbatterien

### Beispiele

### Eingesetzte Lösungen

Lösung 1: 5,21 Gew.-% Lithiumnitrat, 15,58 Gew.-% Lanthannitrat, 10,30 Gew.-% Zirkonnitrat, 1,31 Gew.-% Aluminiumnitrat, Rest Wasser.
   Die Konzentration bezogen auf das Oxid Li_{6,3}La₃Zr₂Al_{0,29}O₁₂ beträgt 10,13 Gew.-%.
Lösung 2: 4,93 Gew.-% Lithiumnitrat, 15,62 Gew.-% Lanthannitrat, 10,32 Gew.- % Zirkonnitrat, 1,58 Gew.-% Aluminiumnitrat, Rest Wasser.
   Die Konzentration bezogen auf das Oxid Li_{5,95}La₃Zr₂Al_{0,35}O₁₂ beträgt 10,15 Gew.-%.
Lösung 3: 5,40 Gew.-% Lithiumnitrat, 15,68 Gew.-% Lanthannitrat, 10,36 Gew.- % Zirkonnitrat, 0,77 Gew.-% Aluminiumnitrat, Rest Wasser.
   Die Konzentration bezogen auf das Oxid Li_{6,49}La₃Zr₂Al_{0,17}O₁₂ beträgt 10,17 Gew.-%.
Lösung 4: 5,21 Gew.-% Lithiumnitrat, 15,66 Gew.-% Lanthannitrat, 10,35 Gew.- % Zirkonnitrat, Gew.-% Aluminiumnitrat, Rest Wasser.
   Die Konzentration bezogen auf das Oxid Li_{6,27}La₃Zr₂Al_{0,24}O₁₂ beträgt 10,26 Gew.-%.

Beispiel 1:

Mischoxidpulver A: 8000 g/h der Lösung 1 werden mit einem Zerstäubergas bestehend aus 15 Nm³/h Luft und 0,05 kg Ammoniakgas/Nm³ Luft mittels einer Zweistoffdüse in eine in einem Reaktionsraum hinein brennende Flamme zerstäubt. Der mittlere Tröpfchendurchmesser beträgt 91,76 µm. Die Flamme wird gebildet durch die Reaktion von 12 Nm³/h Wasserstoff, 70 Nm³/h Luft und 20 Nm³/h Sekundärluft. Lambda beträgt 3,68. Die mittlere Verweilzeit im Reaktionsraum beträgt 0,69 s. die mittlere Geschwindigkeit im Reaktionsraum beträgt 5,8 Nm/s. Nach Abkühlung wird das Mischoxidpulver A an einem Filter von gasförmigen Stoffen abgetrennt.

Das Mischoxidpulver A weist eine Zusammensetzung Li_{6,3}La₃Zr₂Al_{0,29}O₁₂ auf. Die BET-Oberfläche beträgt 3,7 m²/g. Der d₅₀-Wert beträgt 2,76 µm, der d₁₀-Wert 0,33 µm und der d₉₀-Wert 7,30 µm.

### Mischoxidpulver B:

In einem Drehrohrofen wird das Mischoxidpulver A bei einer Temperatur von 1000°C über einen Zeitraum von 12 Stunden thermisch behandelt. Das Mischoxidpulver B hat eine Zusammensetzung Li_{6,3}La₃Zr₂Al_{0,29}O₁₂ eine BET-Oberfläche von 0,30 m²/g und eine Dichte von 4,881 g/cm³, entsprechend 95,7 % der theoretischen Dichte. Das Röntgen-Diffraktogramm zeigt die Signale eines kubischen Granates.

Die Beispiele 2 bis 4 werden analog durchgeführt. Einsatzstoffe, Reaktionsbedingungen sowie die Stoffeigenschaften der erhaltenen Mischoxidpulver sind in den Tabellen 1 und 2 wiedergegeben.

**Tabelle 1: Mischoxid A**

| | **Beispiel** | **1** | **2** | **3** | **4** |
|---|---|---|---|---|---|
| Li-Nitrat | Gew.-% | 5,21 | 4,93 | 5,40 | 5,21 |
| Zr-Nitrat | Gew.-% | 10,30 | 10,32 | 10,36 | 10,35 |
| La-Nitrat | Gew.-% | 15,58 | 15,62 | 15,68 | 15,66 |
| Al-Nitrat | Gew.-% | 1,31 | 1,58 | 0,77 | 1,09 |
| Lösung | kg/h | 8 | 8 | 8 | 8 |
| Zerstäubergas | Nm³/h | 15 | 15 | 15 | 15 |
| d₅₀ | µm | 91,76 | 91,76 | 91,76 | 91,76 |
| Ammoniak | Nm³/h | 0,05 | 0,05 | 0,05 | 0,05 |
| Wasserstoff | Nm³/h | 12 | 10 | 13 | 13 |
| Luft | Nm³/h | 70 | 60 | 75 | 75 |
| Sekundärluft | Nm³/h | 20 | 15 | 25 | 25 |
| Lambda | | 3,68 | 3,78 | 3,72 | 3,72 |
| V_{R}¹⁾ | m/s | 5,8 | 5,0 | 6,3 | 6,3 |
| t_{R}²⁾ | s | 0,69 | 0,80 | 0,64 | 0,64 |
| | | Li_{6,3}La₃Zr₂Al_{0,29}O₁₂ | Li_{5,95}La₃Zr₂Al_{0,35}O₁₂ | Li_{6,49}La₃Zr₂Al_{0,17}O₁₂ | Li_{6,27}La₃Zr₂Al_{0,24}O₁₂ |
| BET-Oberfläche | m²/g | 3,7 | 4,5 | 3,5 | 5,1 |
| XRD-Phase³⁾ | | k | k | k | k |
| Feststoffdichte | g/cm³ | 4,750 | 4,650 | 4,800 | 4,950 |
| d₁₀/d₅₀/d₉₀ | µm | 0,33/2,76/7,30 | 0,38/2,46/8,20 | - | 0,40/2,95/9,16 |

| | | | | | |
|---|---|---|---|---|---|
| 1) mittl. Geschwindigkeit im Reaktor; 2) mittlere Verweilzeit im Reaktor; 3) k=kubisch | | | | | |

**Tabelle 2: Mischoxid B**

| **Beispiel** | | **1a** | **1b** | **2a** | **2b** | **3a** | **3b** |
|---|---|---|---|---|---|---|---|
| Ofentemperatur | °C | 1000 | 800 | 1000 | 800 | 10.00 | 800 |
| Temperierungszeit | h | 12 | 6 | 12 | 6 | 12 | 6 |
| BET-Oberfläche | m²/g | 0,30 | 0,84 | 0,43 | 0,96 | 0,50 | 0,80 |
| XRD-Phase | | k | k | K | k | k | k |
| Feststoffdichte | g/cm³ | 4,881 | 4,899 | 4,929 | 4,900 | 4,900 | 4,905 |
| Feststoffdichte / Theor. Feststoffdichte | % | 95,7 | 96,0 | 96,6 | 96,07 | 96,07 | 96,17 |

## Patentansprüche

1. Verfahren zur Herstellung eines Mischoxidpulvers der Zusammensetzung
LiₓLa₃Zr₂Al_{y}O_{8,5+0,5x+1,5y} mit 6 ≤ x ≤ 7, 0,2 ≤ y ≤ 0,5
bei dem man eine Lösung oder mehrere Lösungen enthaltend jeweils ein oder mehrere Verbindungen des Lithiums, Lanthans, Aluminiums und des Zirkons in einer Konzentration entsprechend der Stöchiometrie und in Form feiner Tröpfchen in eine in einem Reaktionsraum brennende Flamme einbringt, die gebildet wird, indem man ein Sauerstoff enthaltendes Gas und ein bei der Reaktion mit Sauerstoff Wasser bildendes Brenngas in den Reaktionsraum einbringt und dort zündet und nachfolgend den Feststoff von dampf- oder gasförmigen Stoffen abtrennt.

2. Verfahren nach Anspruch 1, **dadurch gekennzeichnet, dass** die mittlere Tröpfchengröße 1 - 120 µm beträgt.

3. Verfahren nach den Ansprüchen 1 oder 2, **dadurch gekennzeichnet, dass** die Metallverbindungen des Lithiums, Lanthans, Aluminiums und Zirkons als Nitrate eingesetzt werden.

4. Verfahren nach den Ansprüchen 1 bis 3, **dadurch gekennzeichnet, dass** wässerige Lösungen eingesetzt werden.

5. Verfahren nach den Ansprüchen 1 bis 4, **dadurch gekennzeichnet, dass** die Konzentration der Lösung 1 bis 50 Gew.-%, bezogen auf die Summe der Oxide, beträgt.

6. Verfahren nach den Ansprüchen 1 bis 5, **dadurch gekennzeichnet, dass** Lambda, definiert als das Verhältnis vorhandener Sauerstoff aus der eingesetzten Luft / Verbrennung des Brenngases notwendiger Sauerstoff, 1,5 bis 6,0 beträgt,

7. Verfahren nach den Ansprüchen 1 bis 6, **dadurch gekennzeichnet, dass** Ammoniak und/oder eine Ammoniak bildende Substanz in den Reaktionsraum einbringt.

8. Verfahren nach Anspruch 7, **dadurch gekennzeichnet, dass** Ammoniakgas in einer Konzentration von
0,01 - 1 kg/Nm³ Zerstäubergas oder
0,001 - 0,05 kg/Nm³ (Brenngas + Sauerstoff enthaltendes Gas) in die Flamme einbringt.

9. Verfahren nach den Ansprüchen 1 bis 8, **dadurch gekennzeichnet, dass** die mittlere Verweilzeit des Reaktionsgemisches im Reaktionsraum 0,25 bis 2,5 Sekunden ist.

10. Verfahren nach den Ansprüchen 1 bis 9, **dadurch gekennzeichnet, dass** die mittlere Geschwindigkeit im Reaktionsraum 1 - 20 Nm/s ist.

11. Mischoxidpulver der Zusammensetzung
LiₓLa₃Zr₂Al_{y}O_{8,5+0,5x+1,5y} mit 6 ≤ x ≤ 7, 0,2 ≤ y ≤ 0,5
**dadurch gekennzeichnet, dass**
es eine BET-Oberfläche von 3 bis 20 m²/g und einen und einen d₅₀-Wert von kleiner oder gleich 5 µm aufweist.

12. Verfahren zur Herstellung eines kubisch kristallinen Mischoxidpulvers mit Granatstruktur der Zusammensetzung LiₓLa₃Zr₂Al_{y}O_{8,5+0,5x+1,5y} mit 6 ≤ x ≤ 7, 0,2 ≤ y ≤ 0,5 mit
a) einer BET-Oberfläche von ≤ 3 m²/g und
b) wenigstens 95% der theoretischen Dichte
**dadurch gekennzeichnet,**
**dass** man das Mischoxid erhältlich nach dem Verfahren gemäß der Ansprüche 1 bis 10 oder das Mischoxid gemäß des Anspruches 11 bei Temperaturen von 700 bis 1200°C über einen Zeitraum von 3 bis 24 Stunden thermisch behandelt.

13. Verfahren zur Herstellung eines kubisch kristallinen Mischoxidpulvers mit Granatstruktur der Zusammensetzung LiₓLa₃Zr₂Al_{y}O_{8,5+0,5x+1,5y} mit 6 ≤ x ≤ 7, 0,2 ≤ y ≤ 0,5 mit
a) einer BET-Oberfläche von ≤ 3 m²/g und
b) wenigstens 95% der theoretischen Dichte
bei dem man eine Lösung enthaltend jeweils ein oder mehrere Verbindungen des Lithiums, Lanthans, Aluminiums und des Zirkons in einer Konzentration entsprechend der Stöchiometrie und in Form feiner Tröpfchen in eine in einem Reaktionsraum brennende Flamme einbringt, die gebildet wird, indem man ein Sauerstoff enthaltendes Gas und ein bei der Reaktion mit Sauerstoff Wasser bildendes Brenngas in den Reaktionsraum einbringt und dort zündet und nachfolgend den Feststoff von dampf- oder gasförmigen Stoffen abtrennt und bei Temperaturen von 700 bis 1200°C über einen Zeitraum von 3 bis 24 Stunden thermisch behandelt.

14. Verwendung der Mischoxidpulver gemäß der Ansprüche 9 oder der nach dem Verfahren gemäß der Ansprüche 10 oder 11 hergestellten Mischoxidpulver als Feststoffelektrolyt in Lithiumionenbatterien.
